# EUROPÄISCHE PATENTSCHRIFT

(11) **EP 0 571 733 B1**
(45) Veröffentlichungstag und Bekanntmachung des Hinweises auf die Patenterteilung: **04.10.1995**
(21) Anmeldenummer: 93104647.8
(22) Anmeldetag: 22.03.1993
(51) Int. Cl.: B60R 22/20

(54) **Sicherheitsgurt-Rückhaltesystem**
Safety belt restraint system
Système de retenue pour ceinture de sécurité

(30) Priorität: 26.05.1992 DE 4217456
(43) Veröffentlichungstag der Anmeldung: 01.12.1993
(73) Patentinhaber: TRW Occupant Restraint Systems GmbH, 73553 Alfdorf (DE)
(72) Erfinder: Holzapfel, Volker, W-6690 St. Wendel (DE); Petzi, Jürgen, W-7340 Geislingen-Eybach (DE)
(74) Vertreter: Degwert, Hartmut, Dipl.-Phys.

(56) Entgegenhaltungen:
- EP-A- 0 277 550
- DE-A- 2 651 037
- DE-A- 2 704 811
- DE-A- 2 834 837
- DE-A- 3 539 399
- DE-A- 3 938 416
- DE-A- 4 018 294
- US-A- 4 173 357

## Beschreibung

Die Erfindung betrifft ein Sicherheitsgurt-Rückhaltesystem für Fahrzeuge, mit einem Höhenversteller für den oberen Umlenkbeschlag des Sicherheitsgurtes, der eine annähernd senkrecht im Fahrzeug befestigte Schiene und einen längs der Schiene verschiebbaren Gleiter aufweist, und mit einem Zug- und Druckkräfte übertragenden Seilzug, dessen unteres Ende mit dem in Längsrichtung des Fahrzeugs verschiebbaren Fahrzeugsitz und dessen oberes Ende mit dem Gleiter zur Umsetzung einer Verschiebung des Fahrzeugsitzes in eine Verschiebung des Gleiters gekoppelt ist.

Ein derartiges Sicherheitsgurt-Rückhaltesystem ist aus der DE-OS 27 04 811 bekannt und bewirkt, daß sich der obere Umlenkbeschlag automatisch auf die optimale Höhe einstellt, wenn der Fahrzeuginsasse den Sitz in die seiner Größe angemessene Position stellt. Im Prinzip läßt sich dieses System auch in Fahrzeugen mit elektrischer Sitzverstellung einsetzen. Speziell an elektrische Sitzverstellungen angepaßte automatische Höhenverstellungen sind andererseits nicht mit herkömmlichen, manuellen Sitzverstellungen kompatibel. Wenn elektrische Sitzverstellungen innerhalb der gleichen Fahrzeugbaureihe als Sonderausstattung angeboten werden, müssen hierfür besondere Höhenversteller eingebaut werden, was diese Sonderausstattung über ihre eigentlichen Kosten hinaus verteuert.

Der Erfindung liegt die Aufgabe zugrunde, ein Sicherheitsgurt-Rückhaltesystem mit einem sich selbsttätig einstellenden Höhenversteller für den oberen Umlenkbeschlag des Sicherheitsgurtes zu schaffen, das sowohl für manuelle als auch für elektrische Sitzverstellungen geeignet ist und nur wenige Bauteile aufweist.

Diese Aufgabe wird bei einem gattungsgemäßen Sicherheitsgurt-Rückhaltesystem erfindungsgemäß dadurch gelöst, daß das Innenseil des Seilzugs mit einem Außengewinde versehen ist, in das ein Getriebeelement einer Kraftübertragungseinrichtung des Höhenverstellers zur Umsetzung einer Drehung des Innenseils in eine Verstellbewegung des Gleiters eingreift.

Bei manuellen Sitzverstellungen wird eine axiale Verschiebung des Seilzugs ausgenutzt. Dabei kann das untere Ende des Seilzugs in bekannter Weise direkt mit dem unteren, in Fahrtrichtung verstellbaren Teil des Fahrzeugsitzes verbunden sein. In vielen Fällen soll der Verstellweg des Höhenverstellers jedoch kleiner sein als der Sitzverstellweg. Für einen solchen Fall kann eine Untersetzung verwirklicht werden, indem ein fahrzeugfest und schwenkbar gelagertes Zahnradsegment tangential in das Außengewinde des Innenseils des Seilzugs eingreift und einen Hebelarm aufweist, der sich quer zur Fahrzeuglängsachse erstreckt und dessen Ende mitnehmend an den Fahrzeugsitz gekoppelt ist. In Richtung auf extreme Sitzpositionen nimmt dann die Untersetzung zu, was im Hinblick auf die jeweils optimale Stellung des Höhenverstellers günstig ist.

Bei elektrischen Sitzverstellungen wird eine Drehung des Innenseils des Seilzugs ausgenutzt. Dazu kann dem Seilzug ein eigener Antriebsmotor zugeordnet sein, der beispielsweise unterhalb des Fahrzeugsitzes angeordnet ist. Kostengünstiger ist es, wenn das untere Ende des Bowdenzugs in eine axial hohle, innen mit Gewinde versehene Verstellspindel der elektrischen Sitzverstellvorrichtung geschraubt ist. Das Untersetzungsverhältnis zwischen dem Antriebsmotor beziehungsweise der Verstellspindel und dem Seilzug wird durch die Steigung des Außengewindes auf dem Innenseil bestimmt.

Die Kraftübertragungseinrichtung ist sowohl bei elektrischen als auch bei von Hand verstellbaren Sitzverstellungen vorzugsweise entweder eine zusammen mit dem Gleiter verschiebbare und in der Verstellrichtung des Höhenverstellers verlaufende Gewindebohrung, in die das Innenseil geschraubt ist, oder eine am Höhenversteller gelagerte Schneckenrad-Ritzel-Kombination, deren Schneckenrad mit dem Gewinde des Innenseils in Zahneingriff steht und deren Ritzel mit einer an den Gleiter gekoppelten Zahnstange in Zahneingriff steht. Im letzteren Fall besteht eine weitere Möglichkeit, die Verstellbewegung des Fahrzeugsitzes zu untersetzen, deren besonderer Vorteil darin liegt, daß der Seilzug nur geringe Zug- und Druckkräfte übertragen muß und entsprechend schwächer dimensioniert sein kann.

Andere vorteilhafte Weiterbildungen der Erfindung sind in den Unteransprüchen angegeben.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: eine Perspektivansicht der zur Erläuterung wichtigen Bauteile einer Ausführungsform des Sicherheitsgurt-Rückhaltesystems;
- Fig. 1a: eine Detailansicht einer besonderen Ausführungsform des Innenseils eines Seilzuges;
- Fig. 2: eine Ausführungsform, die an einen elektrisch verstellbaren Sitz angeschlossen ist;
- Fig. 3: eine Ausführungsform, die an einen von Hand oder elektrisch verstellbaren Sitz oder an einen separaten Betätigungshebel für den Höhenversteller angeschlossen ist;
- Fig. 4: Skizzen zur Erläuterung des variablen Verstellwegs bei der Ausführungsform nach Fig. 3;
- Fig. 5: eine Schneckenrad-Ritzel-Kombination als Kraftübertragungselement des Höhenverstellers;
- Fig. 6: eine Ausführungsform für eine manuelle und von der momentanen Sitzposition unabhängige Höhenverstellung;
- Fig. 7: Detailansichten der Ausführungsform nach Fig. 6;
- Fig. 8: eine weitere Ausführung der manuellen und von der momentanen Sitzposition unabhängigen Höhenverstellung; und
- Fig. 9: eine Detailansicht einer Überhub-Sicherung.

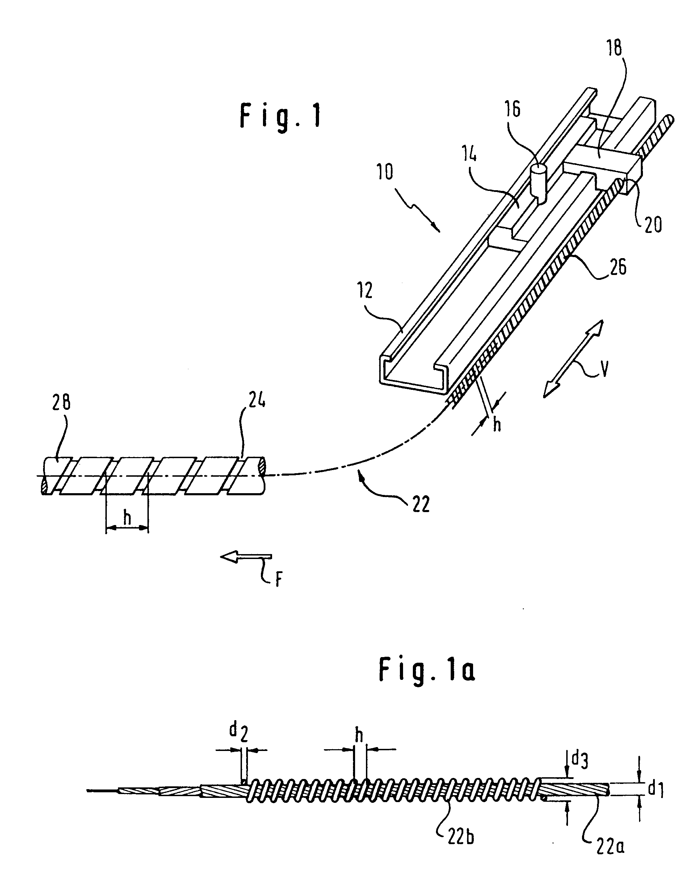

Der in Fig. 1 gezeigte Höhenversteller 10 enthält eine gestreckte Schiene 12. Die Schiene 12 ist in nicht dargestellter Weise senkrecht beispielsweise an der B-Säule eines Fahrzeugs befestigt und hinter einer Abdeckung verborgen. Ein in die Schiene 12 passender Gleiter 14 ist längs der Schiene 12 verschiebbar und weist einen Zapfen 16 auf, an dem der obere Umlenkbeschlag für den Schultergurt eines Sicherheitsgurt-Rückhaltesystems befestigt werden kann. An dem Gleiter 14 ist ein Kraftübertragungselement 18 befestigt, das die Schiene 12 zu deren Seite hin überragt und seitlich der Schiene 12 mit einer Gewindebohrung 20 versehen ist, die in einer Verstellrichtung V parallel zu der Schiene 12 verläuft.

Ferner zeigt Fig. 1 ein unterbrochen dargestelltes Innenseil 22 eines Seilzuges, welcher Zug- und Druckkräfte aufnehmen und übertragen kann. Das Innenseil 22 weist über seine ganze Länge ein Außengewinde 24 auf, das durch eine spiralförmig umlaufende Nut gebildet ist. Bei der in Fig. 1a gezeigten Ausführung besteht das Innenseil 22 aus einer Stahldrahtlitze 22a mit dem Durchmesser d₁ und einer darauf aufgebrachten Wendel 22b aus einem Stahldraht des Durchmessers d₂, wobei diese Wendel einen Außendurchmesser d₃ und eine konstante Steigung h aufweist. Gegebenenfalls kann das Außengewinde 24 auch mehrgängig sein. Das Außengewinde 24 paßt in die Gewindebohrung 20, in die ein oberes Ende 26 des Innenseils 22 eingeschraubt ist. Der zwischen dem oberen Ende 26 und einem unteren Ende 28 des Innenseils 22 verlaufende, in der Zeichnung ausgesparte Abschnitt des Innenseils verläuft in bekannter Weise durch eine wenigstens an ihren Enden am Fahrzeug befestigte Außenhülle des Seilzugs. Falls erforderlich, können zusätzlich Einrichtungen zur Führung der Enden 26, 28 des Innenseils 22 vorhanden sein.

Das untere Ende 28 des Innenseils 22 kann fest mit dem unteren, in Richtung der Fahrzeuglängsachse F verstellbaren Teil eines Fahrzeugsitzes verbunden sein, wie in der DE-OS 27 04 811 beschrieben. In diesem Fall führt das Innenseil 22 bei einer Sitzverstellung eine axiale Bewegung aus und verschiebt den über die Gewindebohrung 20 mitnehmend daran gekoppelten Gleiter 14 in der Verstellrichtung V.

Der in Fig. 1 gezeigte Höhenversteller 10 kann alternativ mit einem elektrisch verstellbaren Fahrzeugsitz verbunden werden.

Ein solcher Sitz weist im allgemeinen eine elektromotorisch angetriebene Verstellspindel auf, an die das untere Ende 28 des Innenseils 22 axial angeschlossen wird. Wenn die Verstellspindel gedreht wird, dreht sich auch das Innenseil 22, das über die Gewindebohrung 20 mit dem Gleiter 14 in Wirkverbindung steht, so daß der Gleiter 14 und der daran befestigte Umlenkbeschlag gemeinsam mit dem Fahrzeugsitz verstellt werden. Die Steigung h des Außengewindes 24 bestimmt die Zahl von Umdrehungen der Verstellspindel, die für einen bestimmten Verstellweg V erforderlich sind.

In besonderen Fällen kann ein eigener Antriebsmotor für die Höhenverstellung vorgesehen sein. Auch dann ist der Anschluß des Seilzugs unproblematisch.

Bei der Ausführungsform nach Fig. 1 genügt es, wenn das obere Ende 26 des Innenseils 22 mit dem Außengewinde 24 versehen ist, da das untere Ende 28 unabhängig von dem Vorhandensein eines Gewindes sowohl mit manuell verstellbaren als auch mit elektrisch verstellbaren Fahrzeugsitzen verbunden werden kann.

Wenn auch das untere Ende 28 des Innenseils 22 mit Außengewinde versehen ist, so ergeben sich weitere Möglichkeiten zum Anschluß des Seilzugs an einen Fahrzeugsitz, von denen einige nachstehend beschrieben werden. Das Außengewinde 24 kann am oberen Endes 26 des Innenseils 22 eine andere Steigung aufweisen als am unteren Ende 28. Wenn die Steigungen gleich sind oder das Innenseil sogar in ganzer Länge mit Gewinde versehen ist, gibt es dennoch zahlreiche Möglichkeiten für die individuelle Anpassung des Höhenverstellers 10 an bestimmte Fahrzeugsitztypen, wie sich aus dem Folgenden ergibt.

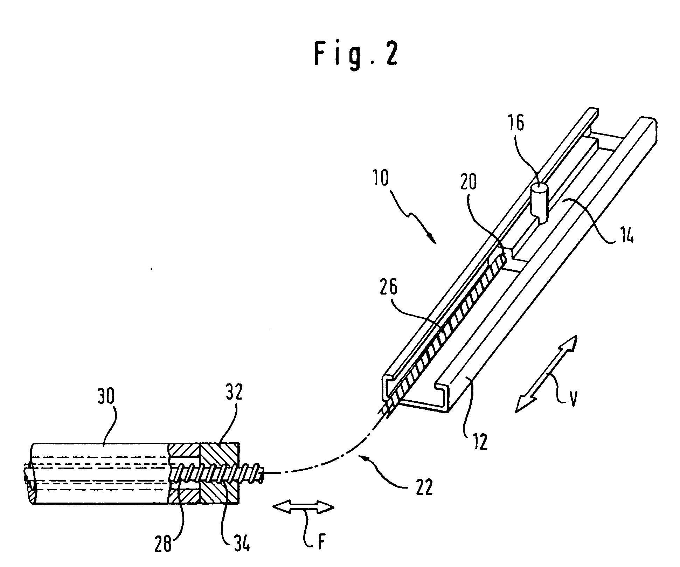

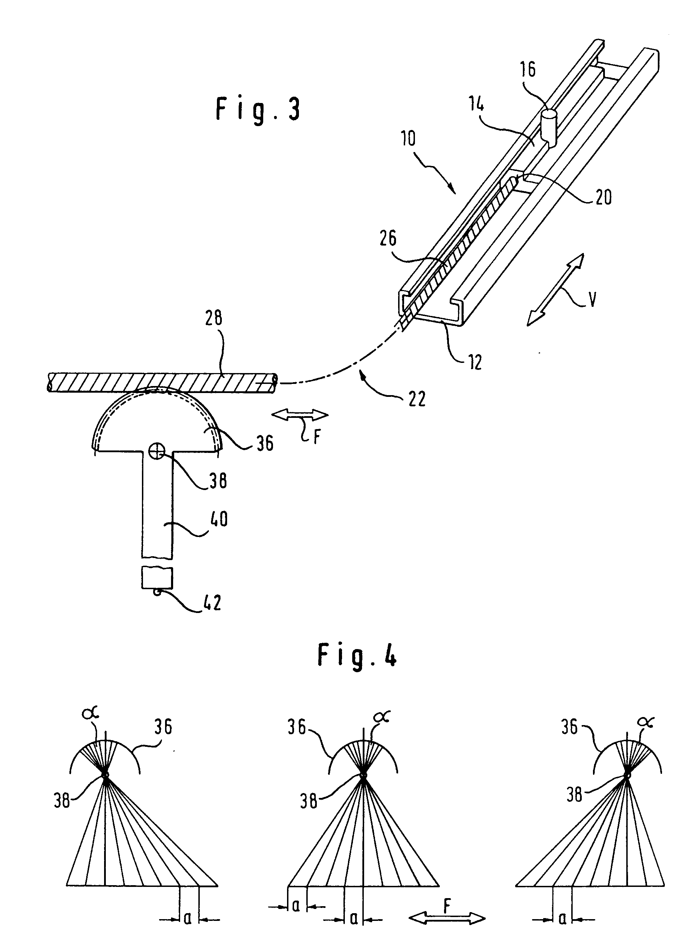

Besonders vorteilhafte Ausführungformen für den Anschluß des Endes 28 des Innenseils 22 an den Fahrzeugsitz werden im folgenden im Zusammenhang mit den Fig. 2 bzw. 3 beschrieben. Der dort gezeigte Höhenversteller 10 unterscheidet sich von dem in Fig. 1 gezeigten nur dadurch, daß die Gewindebohrung 20 in dem Gleiter 14 selbst ausgebildet ist, so daß das in die Gewindebohrung geschraubte obere Ende 26 des Innenseils 22 innerhalb der Schiene 12 verläuft (soweit Elemente des Sicherheitsgurt-Rückhaltesystems bereits beschriebenen Elementen im wesentlichen gleichen, werden nachstehend gleiche Bezugszeichen verwendet).

Fig. 2 zeigt weiterhin eine Verstellspindel 30, die zu einem automatisch mit Hilfe eines Elektromotors verstellbaren Fahrzeugsitz gehört (nicht eingezeichnet). Die Verstellspindel 30 ist eine Hohlwelle, an deren Ende axial eine Hülse 32 befestigt ist. Die Hülse 32 ist axial durchbohrt und mit einem Innengewinde 34 versehen, das mit dem Außengewinde 24 des Bowdenzugs 22 zusammenpaßt. Das untere Ende 28 des Innenseils 22 ist in die Hülse 32 eingeschraubt und erstreckt sich weit genug für den jeweiligen Verstellweg V in die Verstellspindel 30 hinein.

Bei einer Sitzverstellung dreht sich die Verstellspindel 30 und verschiebt das Innenseil entlang der Fahrzeuglängsachse F, so daß der Höhenversteller 10 ebenfalls verstellt wird. Wie bei der im Zusammenhang mit Fig. 1 beschriebenen Anschlußmöglichkeit an einen elektrisch verstellbaren Sitz bestimmt auch hier die Steigung h des Außengewindes 24 das Übersetzungsverhältnis und wird so gewählt, daß der Sitzverstellweg dem gewünschten, im allgemeinen kleineren Verstellweg des Höhenverstellers 10 entspricht.

Für einen optimalen Ablaufwinkel des Schultergurtes vom Umlenkbeschlag kann es günstig sein, wenn das Verhältnis des Höhenverstellwegs zum Sitzverstellweg in Richtung auf extreme Sitzpositionen abnimmt. Ein solcher Effekt wird vorteilhaft gemäß Fig. 3 erzielt. Ein Zahnradsegment 36 ist auf einer am Fahrzeug befestigten Achse 38 schwenkbar in einer gemeinsamen Ebene mit dem unteren Ende 28 des Innenseils 22 gelagert. Die Verzahnung des Zahnradsegments 36 greift tangential in das Außengewinde 24 des unteren Endes 28 des Innenseils 22 ein, das an dieser Stelle in nicht gezeigter Weise axial verschiebbar geführt ist. Das Zahnradsegment 36 ist mit einem Hebelarm 40 verbunden, der in einer Mittenstellung des nicht eingezeichneten Fahrzeugsitzes etwa senkrecht zur Fahrzeuglängsachse F steht und dessen Ende 42 mitnehmend an den Fahrzeugsitz gekoppelt ist, beispielsweise durch einen Vorsprung, der verschiebbar in eine quer zur Fahrzeuglängsachse F verlaufende Schiene am Sockel des Fahrzeugsitzes eingreift oder an einem separaten Betätigungshebel (nur für den Höhenversteller) angeschlossen ist.

Die variable Untersetzung der Anordnung aus Zahnradsegment 36 und Hebelarm 40 wird anhand der Skizzen von Fig. 4 verdeutlicht. Jeweils gleichen Verstellwegen a entsprechen unterschiedliche Drehwinkel α des schematisch eingezeichneten Zahnradsegments 36. Die Drehwinkel werden in Richtung auf vorgeschobene bzw. zurückgeschobene Sitzpositionen kleiner, wie aus der linken bzw. rechten Skizze in Fig. 4 ersichtlich. Der entsprechende Verstellweg V des Höhenverstellers 10 wird also ebenfalls kleiner.

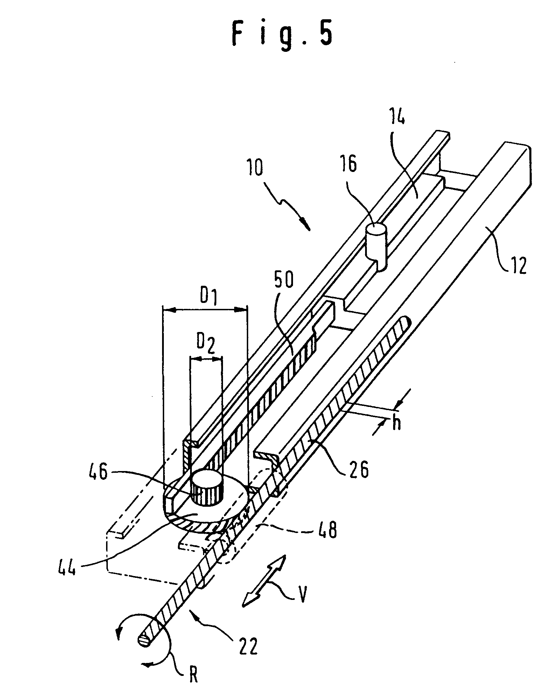

Auch am Höhenversteller 10 selbst kann eine vorteilhafte Untersetzung vorgenommen werden. Wie Fig. 5 zeigt, ist ein Schneckenrad 44 mit einem axial daran angeflanschten Ritzel 46 drehbar an der Schiene 12 des Höhenverstellers 10 gelagert, wobei die Ebene des Schneckenrades 44 mit dem oberen Ende 26 des Innenseils 22 in einer Ebene liegt. Die Verzahnung des Schneckenrades 44 entspricht dem Außengewinde 24 des Innenseils 22 und greift seitlich in das Außengewinde 24 des Innenseils 22 ein, das in diesem Bereich von einer Hülse 48 geführt ist, die eine Aussparung für den Umfang des Schneckenrades 44 aufweist. Das Ritzel 46 steht mit der Verzahnung einer Zahnstange 50 in Zahneingriff, die sich längs der Schiene 12 erstreckt und die für eine gemeinsame Verschiebung mit dem Gleiter 14 längs der Schiene 12 am Gleiter 14 befestigt ist.

Auch bei dieser Ausführungsform wird sowohl eine axiale Bewegung des Innenseils 22 in der Verstellrichtung V als auch eine Drehung R in eine Längsverschiebung des Gleiters 14 und somit eine Höhenverstellung des Umlenkbeschlages umgewandelt. Die Schneckenrad-Ritzel-Kombination 44, 46 führt zu einer Untersetzung, die bei einer Axialbewegung des Innenseils 22 durch das Verhältnis des Durchmessers D₁ des Schneckenrades 44 zum Durchmesser D₂ des Ritzels 46 gegeben ist. Bei Drehung des Innenseils 22 ist außerdem das durch die Steigung h des Außengewindes 24 gegebene Über- bzw. Untersetzungsverhältnis zu berücksichtigen. Letzteres gibt eine weitere Möglichkeit, das Gesamtübersetzungsverhältnis individuell zu wählen.

Der in Fig. 5 dargestellte Höhenversteller kann in einfacher Weise durch Austausch lediglich der Zahnrad-Ritzel-Kombination 44, 46 an unterschiedliche Sitzsysteme angepaßt werden. Ein weiterer Vorteil dieser Ausführungsform ist, daß der Seilzug wesentlich geringere Kräfte als bei den zuvor beschriebenen Ausführungsformen übertragen muß und entsprechend schwächer dimensioniert sein kann. Der Höhenversteller kann auf jede der zuvor beschriebenen Arten an einen Fahrzeugsitz angeschlossen werden, so daß sich ein breites Spektrum von Einsatz- und Variationsmöglichkeiten ergibt. Insbesondere ist es möglich, den Höhenversteller 10 und die zum Anschluß an den Fahrzeugsitz erforderlichen Bauteile als Baukastensystem vorzusehen, so daß eine rationelle individuelle Anpassung der Übersetzung und des Hubes des Höhenverstellers 10 an das jeweilige Fahrzeug bzw. an das jeweilige Sitzsystem möglich ist. Ferner können bereits vorhandene Serienteile übernommen beziehungsweise vorhandene Höhenversteller zusätzlich mit den beschriebenen Einrichtungen ausgerüstet werden.

Eine Grundeinstellung zwischen dem Höhenversteller 10 und dem Fahrzeugsitz erfolgt bei der Montage durch Drehen des Innenseils 22, so daß ein einfacher Toleranzausgleich möglich ist. Für eine optimale Sitzposition kann im Einzelfall eine von der Grundeinstellung abweichende Sitzposition gewünscht sein. Entsprechende manuelle Einstellvorrichtungen am Höhenversteller sind grundsätzlich bekannt. Für die Ausführungsform nach Fig. 5 werden zwei besonders einfache Weiterbildungen vorgeschlagen, die eine zusätzliche manuelle Höhenverstellung ermöglichen.

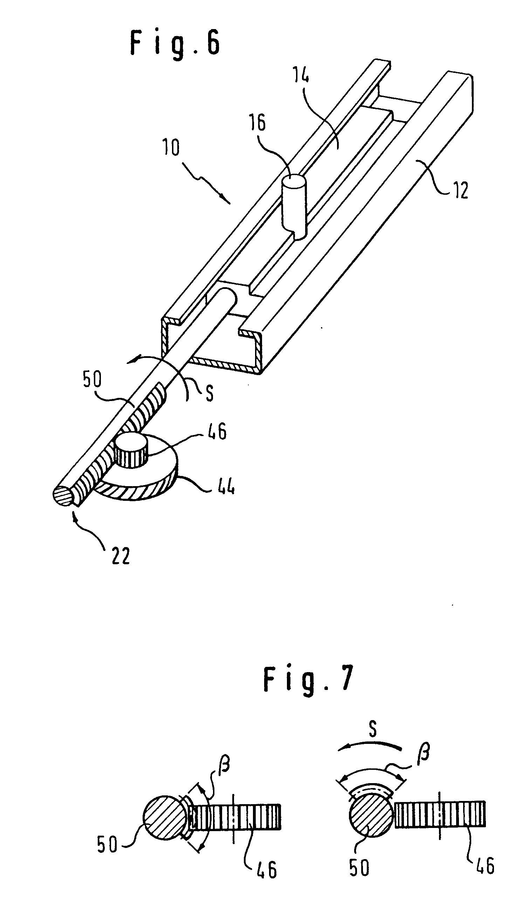

Gemäß Fig. 6 und 7 ist eine Zahnstange 50 mit rundem Querschnittsprofil der Verzahnung vorgesehen, die in einem Winkelbereich β um ihre Achse radial vorspringt und die in einer Richtung S um ihre Achse außer Eingriff mit dem Ritzel 46 schwenkbar ist, indem der Fahrzeuginsasse ein ihm zugängliches, nicht eingezeichnetes Betätigungselement betätigt. Fig. 7 zeigt eine eingerastete und eine Verstellposition der jeweils im Schnitt dargestellten Zahnstange 50 bezüglich des Ritzels 46.

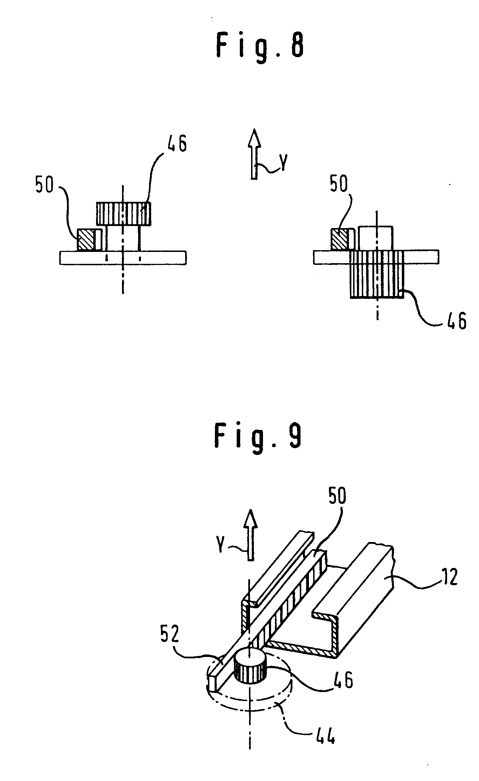

Gemäß Fig. 8 ist das Ritzel 46 in einer axialen Richtung Y oder entgegengesetzt dazu außer Eingriff mit der Zahnstange 50 verschiebbar, um eine von der momentanen Sitzposition unabhängige manuelle Höhenverstellbarkeit zu verwirklichen.

Damit ein gewaltsamer überhub des Innenseils 22, wie er beispielsweise beim Ausbau des Fahrzeugsitzes vorkommen kann, den Höhenversteller 10 nicht beschädigt, kann bei den Ausführungsformen nach den Fig. 5 bis 8 zusätzlich vorgesehen werden, die Zahnstange 50 nur in einem Teilbereich zu verzahnen. Über den ungezahnten Enden der Zahnstange 50, von der in Fig. 9 nur ein Ende 52 gezeigt ist, kann sich das Ritzel 46 frei drehen, wenn das Innenseil 22 über den normalen Verstellweg hinaus gedreht oder verschoben wird.

## Patentansprüche

1. Sicherheitsgurt-Rückhaltesystem für Fahrzeuge, mit einem Höhenversteller für den oberen Umlenkbeschlag des Sicherheitsgurtes, der eine annähernd senkrecht im Fahrzeug befestigte Schiene und einen längs der Schiene verschiebbaren Gleiter aufweist, und mit einem Zug- und Druckkräfte übertragenden Seilzug, dessen unteres Ende mit dem in Längsrichtung des Fahrzeugs verschiebbaren Fahrzeugsitz und dessen oberes Ende mit dem Gleiter zur Umsetzung einer Verschiebung des Fahrzeugsitzes in eine Verschiebung des Gleiters gekoppelt ist, dadurch gekennzeichnet, daß das Innenseil (22) des Seilzuges mit einem Außengewinde (24) versehen ist, in das ein Getriebeelement (20; 44, 46) einer Kraftübertragungseinrichtung des Höhenverstellers (10) zur Umsetzung einer Drehung des Innenseils (22) in eine Verstellbewegung des Gleiters (14) eingreift.

2. Sicherheitsgurt-Rückhaltesystem nach Anspruch 1, dadurch gekennzeichnet, daß die Kraftübertragungseinrichtung (20; 44, 46) eine in dem Gleiter (14) in der Verstellrichtung (V) des Höhenverstellers (10) verlaufende Gewindebohrung (20) umfaßt, in die das Innenseil (22) des Seilzuges geschraubt ist.

3. Sicherheitsgurt-Rückhaltesystem nach Anspruch 1, dadurch gekennzeichnet, daß die Kraftübertragungseinrichtung (20; 44, 46) eine am Höhenversteller (10) gelagerte Schneckenrad-Ritzel-Kombination (44, 46) ist, deren Schneckenrad (44) mit dem Außengewinde (24) des Innenseils des Seilzuges in Zahneingriff steht und deren Ritzel (46) mit einer Zahnstange (50) in Zahneingriff steht, die mit dem Gleiter (14) verbunden ist.

4. Sicherheitsgurt-Rückhaltesystem nach Anspruch 3, dadurch gekennzeichnet, daß die Zahnstange (50) ein rundes Querschnittsprofil aufweist, daß ihre Verzahnung in einem begrenzten Winkelbereich (β) um ihre Achse radial vorspringt und daß die Zahnstange (50) für eine manuelle und von der momentanen Sitzposition unabhängige Höhenverstellung um ihre Achse außer Eingriff mit dem Ritzel (46) schwenkbar ist.

5. Sicherheitsgurt-Rückhaltesystem nach Anspruch 3, dadurch gekennzeichnet, daß das Ritzel (46) für eine manuelle und von der momentanen Sitzposition unabhängige Höhenverstellung axial außer Eingriff mit der Zahnstange (50) verschiebbar ist.

6. Sicherheitsgurt-Rückhaltesystem nach einem der Ansprüche 3 bis 5, dadurch gekennzeichnet, daß die Verzahnung der Zahnstange (50) zu ihren Enden hin ausläuft und das Ritzel (46) an diesen Enden außer Eingriff mit der Zahnstange (50) frei drehbar ist.

7. Sicherheitsgurt-Rückhaltesystem nach einem der vorstehenden Ansprüche, dadurch gekennzeichnet, daß der Seilzug mit dem Fahrzeugsitz gekoppelt ist, indem ein am Fahrzeugaufbau schwenkbar gelagertes Zahnradsegment (36) tangential in das Außengewinde (24) des Innenseils (22) des Seilzuges eingreift und einen Hebelarm (40) aufweist, der sich quer zur Fahrzeuglängsachse (F) erstreckt und dessen Ende mitnehmend an den Fahrzeugsitz gekoppelt oder an einen separaten Betätigungshebel für den Höhenversteller angeschlossen ist.

8. Sicherheitsgurt-Rückhaltesystem nach einem der vorstehenden Ansprüche, dadurch gekennzeichnet, daß das Innenseil (22) des Seilzuges mittels eines Elektromotors drehbar ist.

9. Sicherheitsgurt-Rückhaltesystem nach Anspruch 8, dadurch gekennzeichnet, daß das untere Ende (28) des Seilzugs (22) in eine axial hohle, mit Innengewinde (24) versehene Verstellspindel (30) einer elektrischen Sitzverstellvorrichtung geschraubt ist.

10. Sicherheitsgurt-Rückhaltesystem nach Anspruch 1, dadurch gekennzeichnet, daß der Höhenversteller (10) durch axiale Betätigung des Seilzugs (22) einstellbar ist.

11. Sicherheitsgurt-Rückhaltesystem nach einem der vorstehenden Ansprüche, dadurch gekennzeichnet, daß das Innenseil (22) aus einer Stahldrahtlitze (22a) und einer darauf aufgebrachten Wendel (22b) aus einem Stahldraht mit konstanter Steigung (h) gebildet ist.

## Claims

1. A safety belt restraining system for vehicles having a height adjuster for the upper deflector fitting of the safety belt featuring a rail secured approximately vertically in the vehicle and a slider free to shift along the rail, and a sheathed cable for transmitting tensile and compressive forces, the lower end of which is coupled with the vehicle seat shiftable in the longitudinal direction of the vehicle and the upper end of which is coupled to the slider to translate shifting movement of the vehicle seat to shifting of the slider **characterized in that** the inner cable (22) of the sheathed cable is provided with a male thread (24) for engaging a gear member (20;44,46) of a force transmitting means of the height adjuster (10) to translate rotary movement of said inner cable (22) into an adjusting movement of said slider (14).

2. A safety belt restraining system according to claim 1, wherein said force transmitting means (20;44,46) comprise a threaded hole (20) in said slider (14) running in said adjustment direction (V) of said height adjuster (10), said inner cable (22) of the sheathed cable being screwed into said threaded hole (20).

3. A safety belt restraining system according to claim 1, wherein said force transmitting means (20; 44,46) is a worm and pinion combination (44, 46) mounted on said height adjuster (10), the wormgear (44) of which mates with the male thread (24) of the inner cable of the sheathed cable and the pinion (46) of which mates with a rack (50) connected to said slider (14).

4. A safety belt restraining system according to claim 3, wherein said rack (50) features a round cross-section profile, its toothing projecting radially in a limited angular range (b) about its axis and wherein said rack (50) is free to swivel out of engagement with said pinion (46) for manual height adjustment irrespective of the momentary position of the seat.

5. A safety belt restraining system according to claim 3, wherein said pinion (46) is free to shift axially out of engagement with said rack (50) for manual height adjustment irrespective of the momentary position of the seat.

6. A safety belt restraining system according to any of the above claims 3 to 5, wherein the toothing of said rack (50) runs out towards its ends and said pinion (46) is free to turn at these ends out of engagement with said rack (50).

7. A safety belt restraining system according to any of the above claims, wherein the sheathed cable is coupled to the vehicle seat by a gearwheel segment (36) swivably mounted on the vehicle body and tangentially engaging the male thread (24) of said inner cable (22) of the sheathed cable and having a lever arm (40) extending transversely to the longitudinal axis (F) of the vehicle, the end of which is coupled positively to the vehicle seat or is connected to a separate actuating lever for the height adjuster.

8. A safety belt restraining system according to any of the above claims, wherein said inner cable (22) of the sheathed cable can be rotated by means of an electric motor.

9. A safety belt restraining system according to claim 8, wherein the lower end (28) of said sheathed cable (22) is screwed into an axial hollow, female threaded (24) adjustment spindle (30) of an electric seat adjustment device.

10. A safety belt restraining system according to claim 1, wherein the height adjuster (10) is adjustable by axial actuation of said sheathed cable (22).

11. A safety belt restraining system according to any of the above claims, wherein said inner cable (22) consists of a stranded steel wire (22a ) surrounded by a spiral (22b) of steel wire having a constant pitch (h.)

## Revendications

1. Système de retenue pour ceinture de sécurité, comprenant un dispositif de réglage en hauteur oui est destiné à la garniture supérieure de renvoi de la ceinture de sécurité et oui comprend un rail fixé sensiblement verticalement dans le véhicule et un coulisseau pouvant se déplacer le long du rail, et comprenant un dispositif de traction par câble qui transmet des forces de traction et de pression, dont l'extrémité inférieure est couplée au siège du véhicule déplaçable dans la direction longitudinale du véhicule et dont l'extrémité supérieure est couplée au coulisseau pour convertir un déplacement du siège du véhicule en un déplacement du coulisseau, caractérisé en ce que le câble intérieur (22) du dispositif de traction par câble est muni d'un filetage extérieur (24) dans lequel s'engage un élément de mécanisme (20 ; 44, 46) d'un dispositif de transmission de forces du dispositif de réglage en hauteur (10) pour convertir une rotation du câble intérieur (22) en un déplacement de réglage du coulisseau (14).

2. Système de retenue pour ceinture de sécurité selon la revendication 1, caractérisé en ce que le dispositif de transmission de forces (20 ; 44, 46) comprend un taraudage (20) qui s'étend dans le coulisseau (14) dans le sens de réglage (V) du dispositif de réglage en hauteur (10) et dans lequel est vissé le câble intérieur (22) du dispositif de traction par câble.

3. Système de retenue pour ceinture de sécurité selon la revendication 1, caractérisé en ce que le dispositif de transmission de forces (20 ; 44, 46) est une combinaison roue tangente-pignon (44, 46) qui est montée sur le dispositif de réglage en hauteur (10), dont la roue tangente (44) s'engrène avec le filetage extérieur (24) du câble intérieur du dispositif de traction par câble et dont le pignon (46) s'engrène avec une crémaillère (50) qui est reliée au coulisseau (14).

4. Système de retenue pour ceinture de sécurité selon la revendication 3, caractérisé en ce que la crémaillère (50) présente un profil transversal rond, en ce que sa denture dépasse radialement autour de son axe dans une plage angulaire limitée (β), et en ce que la crémaillère (50) peut pivoter autour de son axe pour se dégager du pignon (46) afin d'effectuer un réglage en hauteur manuel et indépendant de la position instantanée du siège.

5. Système de retenue pour ceinture de sécurité selon la revendication 3, caractérisé en ce que le pignon (46) peut être dégagé axialement de la crémaillère (50) pour effectuer un réglage en hauteur manuel et indépendant de la position instantanée du siège.

6. Système de retenue pour ceinture de sécurité selon l'une des revendications 3 à 5, caractérisé en ce que la denture de la crémaillère (50) est interrompue au niveau des extrémités de cette dernière, et le pignon (46) peut tourner librement, à ces extrémités, sans être engrené avec la crémaillère (50).

7. Système de retenue pour ceinture de sécurité selon l'une des revendications précédentes, caractérisé en ce que le dispositif de traction par câble est couplé au siège du véhicule en ce qu'un segment de roue dentée (36) monté pivotant sur la carrosserie du véhicule s'engrène tangentiellement dans le filetage extérieur (24) du câble intérieur (22) du dispositif de traction par câble et comporte un bras (40) formant levier, qui s'étend transversalement à l'axe longitudinal (F) du véhicule et dont l'extrémité est couplée par une liaison d'entraînement au siège du véhicule et reliée à un levier d'actionnement séparé du dispositif de réglage en hauteur.

8. Système de retenue pour ceinture de sécurité selon l'une des revendications précédentes, caractérisé en ce que le câble intérieur (22) du dispositif de traction par câble peut être mis en rotation au moyen d'un moteur électrique.

9. Système de retenue pour ceinture de sécurité selon la revendication 8, caractérisé en ce que l'extrémité inférieure (28) du dispositif de traction par câble (22) est vissée dans une broche de réglage creuse axialement (30) d'un dispositif électrique de réglage de siège, ladite broche de réglage (30) étant pourvue d'un taraudage (24).

10. Système de retenue pour ceinture de sécurité selon la revendication 1, caractérisé en ce que le dispositif de réglage en hauteur (10) peut être réglé par un actionnement axial du dispositif de traction par câble (22).

11. Système de retenue pour ceinture de sécurité selon l'une des revendications précédentes, caractérisé en ce que le câble intérieur (22) est formé d'un toron en fil d'acier (22a) et d'une spirale (22b) en fil d'acier qui est appliquée sur ledit toron et qui présente un pas constant (h).
